# EUROPÄISCHE PATENTSCHRIFT

(11) **EP 1 514 966 B1**
(45) Veröffentlichungstag und Bekanntmachung des Hinweises auf die Patenterteilung: **03.10.2007**
(21) Anmeldenummer: 04018997.9
(22) Anmeldetag: 11.08.2004
(51) Int. Cl.: D06F 37/26, D06F 37/00, F16J 15/32

(54) **Waschmaschine mit einer Dichtungsanordnung**
Washing machine with sealing arrangement
Machine à laver avec dispositif d'étanchéité

(30) Priorität: 11.09.2003 DE 10342254
(43) Veröffentlichungstag der Anmeldung: 16.03.2005
(73) Patentinhaber: Miele & Cie. KG, 33332 Gütersloh (DE)
(72) Erfinder: Eckert, Norbert, 33102 Paderborn (DE); Maass, Heinz, 33378 Rheda-Wiedenbrück (DE)

(56) Entgegenhaltungen:
- EP-A- 0 579 849
- EP-A- 0 922 889
- DE-A- 4 422 853
- DE-A- 10 133 892
- DE-B- 10 342 262
- DE-C- 10 040 319

## Beschreibung

### Waschmaschine mit einer Dichtungsanordnung

Die Erfindung betrifft eine Waschmaschine mit einem im Wesentlichen zylindrischen Laugenbehälter und mit einer darin drehbar gelagerten ebenfalls zylindrischen Trommel, wobei zur drehbaren Lagerung der Trommel an deren Boden ein Wellenzapfen angeordnet ist, welcher sich durch eine Öffnung im Laugenbehälterboden erstreckt und von mindestens zwei Lagern aufgenommen wird, welche innerhalb eines Lagergehäuses angeordnet sind, und wobei zur Abdichtung der Öffnung eine Dichtungsanordnung vorgesehen ist, die mit einem dynamisch beanspruchten Dichtungsteil an dem Wellenzapfen, einem auf dem Wellenzapfen angeordneten Laufring oder am Innenring des Lagers und mit einem statisch beanspruchten Dichtungsteil am Laugenbehälterboden oder am Lagergehäuse anliegt und laugenseitig vor oder konzentrisch zu diesen Dichtungsteilen eine Vorabschirmung besitzt.

Eine solche Waschmaschine ist aus der DE 44 22 853 A1 bekannt.

Die zur Lagerung des Wellenzapfens einer Waschmaschinentrommel verwendeten Wälzlager können nur störungsfrei arbeiten und hohe Gebrauchszeiten erreichen, wenn sie durch wirksame Dichtungen während der gesamten Betriebszeit geschützt werden, so dass das Eindringen von Schmutz und das Austreten von Schmierstoff verhindert wird. Bei Trommelwaschmaschinen ist es besonders wichtig, den Eintritt von Kondenswasser und Lauge aus dem Laugenbehälter in das Lager zu verhindern. Hierzu ist es bekannt, vor dem Lager Radialwellendichtringe einzusetzen. Es entstehen jedoch bei zunehmender Alterung und insbesondere bei einem Kontakt der Dichtringe mit Waschlauge Undichtigkeiten, welche das Eindringen von Flüssigkeit in das Lager ermöglichen und dessen Ausfall verursachen. Bei der aus der DE 44 22 853 A1 bekannten Waschmaschine ist deshalb zum Schutz der Dichtringe vor Waschlauge auf dem Wellenzapfen ein erstes, im wesentlichen kreisringförmiges Schutzelement angeordnet, welches mit einem am Lagergehäuse oder am Laugenbehälterboden angeordneten zweiten Schutzelement eine labyrinthartige Vorabschirmung bildet. Solche Labyrinthdichtungen benötigen immer zwei Bauteile, was ihre Herstellung und ihre Montage verteuert. Bei anderen Ausführungsformen wird ein Teil des Labyrinths durch das elastische Dichtungsmaterial selbst gebildet, wodurch dieses mit Lauge in Kontakt kommt. Dies hat einen schnelleren Verschleiß des nur gering laugenbeständigen Elastomers zur Folge.

Aus der DE 100 40 319 C1 ist eine Waschmaschine mit einem Kunststoff-Laugenbehälter bekannt. Bei dieser Waschmaschine wird eine Dichtungsanordnung eingesetzt, die keine Vorabschirmung besitzt.

Der Erfindung stellt sich somit das Problem, eine Waschmaschine der eingangs genannten Art dahingehend zu verbessern, dass die elastischen und/oder nur gering laugenbeständigen Dichtungsteile sicher, einfach und preiswert vor einem Kontakt mit Waschlauge geschützt werden.

Erfindungsgemäß wird dieses Problem durch eine Waschmaschine mit den Merkmalen des Patentanspruchs 1 gelöst. Vorteilhafte Ausgestaltungen und Weiterbildungen der Erfindung ergeben sich aus den nachfolgenden Unteransprüchen.

Durch die Ausstattung einer Waschmaschine mit der erfindungsgemäßen Dichtungsanordnung werden die Kontaktzeiten der Dichtungsteile mit Waschlauge erheblich verringert.

In einer vorteilhaften Ausführungsform ist die Vorabschirmung als ein den Wellenzapfen umgebender Umlaufring mit im Wesentlichen v- oder u-förmigem, nach außen geöffnetem Querschnitt ausgebildet (Anspruch 2). Aufgrund dieser Form wird die in den Bereich der Durchführungsöffnung eintretende Waschlauge sicher und umgehend aus dem Dichtungsbereich in den unteren Bereich des Laugenbehälters abgeführt.

Dabei ist es besonders vorteilhaft, wenn sich der der Öffnung gegenüberliegende Vereinigungsbereich der beiden Schenkel der Vorabschirmung bis annähernd in den Bereich des Wellenzapfens bzw. des Laufrings erstreckt (Anspruch 3). Hierdurch werden die Dichtungsteile komplett abgeschirmt.

Es ist außerdem vorteilhaft, wenn die Vorabschirmung mit einer Abflussbohrung ausgestattet ist welche sich im Einbauzustand etwa in der Sechs-Uhr-Position befindet (Anspruch 4). Durch die Bohrung kann Kondenswasser oder Lauge, welche(s) die Vorabschirmung passiert hat, in den unteren Bereich des Laugenbehälters abfließen.

Es ist auch vorteilhaft, wenn die Vorabschirmung wenigstens teilweise aus Metall hergestellt ist (Anspruch 5). Hierdurch können schwer zu entformende Hinterschnitte vermieden werden.

Ausführungsbeispiele der Erfindung sind in den Zeichnungen rein schematisch dargestellt und werden nachfolgend näher beschrieben. Es zeigen
- Figuren 1 und 5: die Lageranordnung einer Waschmaschine in der Seitenansicht im Schnitt;
- Figur 1a, 2, 3, 4, 6, 7: als Ausschnitte erfindungsgemäße Dichtungsanordnungen als Teil der Lageranordnung.

In den Figuren sind gleiche oder gleichwirkende Teile durchgängig mit identischen Bezugszeichen versehen.

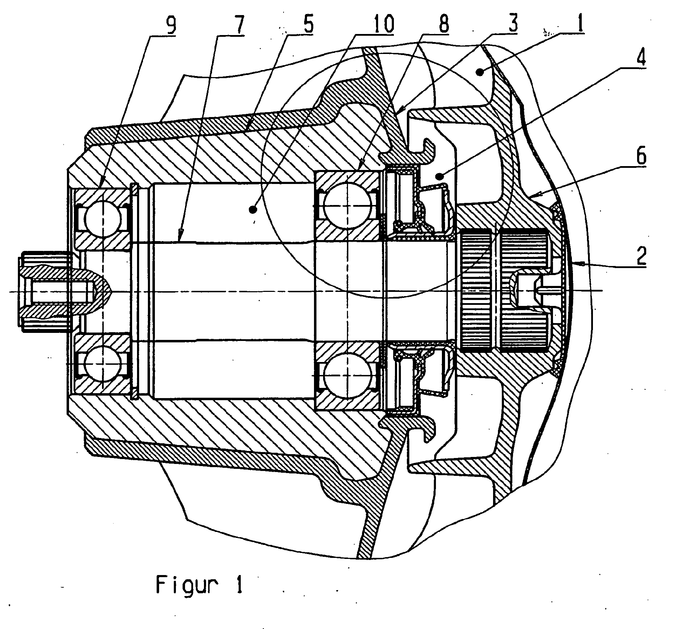

Die Waschmaschine gemäß Figur 1 besitzt einen im Wesentlichen zylindrischen Laugenbehälter (1) und eine darin drehbar gelagerte, ebenfalls zylindrische Trommel (2) zur Aufnahme der Wäsche (nicht dargestellt). Der Laugenbehälter (1) ist aus laugenbeständigem Kunststoff hergestellt. Er besitzt im Zentrum seines Bodens (3) eine Öffnung (4), hinter der ein Lagergehäuse (5) angeordnet ist. Es wird von einem nicht dargestellten Lagerkreuz getragen, welches mit seinen äußeren Enden am Rand der Mantelfläche (nicht dargestellt) des Laugenbehälters (1) oder direkt am Boden (3) befestigt ist. Ein mit der Trommel (2) über einen Flansch (6) verbundener Wellenzapfen (7) ist durch die Öffnung (4) hindurch geführt. Die Lagerung für die Trommel (2) besteht aus einem vorderen und einem hinteren Radialkugellager (8, 9), die durch Presspassung in der Innenbohrung (10) des Lagergehäuses (5) fixiert sind und den Wellenzapfen (7) aufnehmen. Das vordere Lager (8) wird durch eine nachfolgend beschriebene Dichtungsanordnung geschützt, die entweder in die Innenbohrung (10) des Lagergehäuses (5) oder die davor befindliche Öffnung (4) des Laugenbehälterbodens (3) eingesetzt ist.

Die in Figur 1a dargestellte Dichtungsanordnung beinhaltet einen elastischen Radialwellendichtring (11), beispielsweise aus NBR, der mit drei dynamisch beanspruchten Dichtlippen (12, 13, 14) an einem Laufring (15) anliegt. Der Laufring (15) ist unter Zwischenlage einer elastischen Manschette (16) durch Presspassung auf den Wellenzapfen (7) aufgesetzt und auf der Laugenseite zu einer radial gerichteten Schleuderscheibe (17) hochgezogen. In den Endbereich der Schleuderscheibe (17) erstreckt sich eine axial gerichtete dynamische Vorabschirmung (18). Die Dichtlippen (12, 13, 14) und die dynamische Vorabschirmung (18) sind an einen Versteifungsring (19) aus verzinktem Blech anvulkanisiert, der ein rechtwinkliges Profil und dadurch einen radial gerichteten Abschnitt (20) und einen axial gerichteten Abschnitt (21) aufweist. Eine umlaufende Spiralfeder (22) an der Dichtlippe (14) sorgt für eine besseren Kontakt mit dem Laufring (15). Der statisch beanspruchte Teil (23) der Dichtung ist an den axialen Abschnitt (21) des Versteifungsrings (19) auf seiner äußeren Umfangsfläche anvulkanisiert. Dieser Teil liegt an einem später beschriebenen Teil des Laugenbehälterbodens (3) an.

Ein weiterer Bestandteil der dargestellten Dichtungsanordnung ist eine Vorabschirmung, die den Radialwellendichtring (11) konzentrisch umgibt. Diese Vorabschirmung besteht aus einem Umlaufring (24) mit im Wesentlichen u-förmigem, nach außen geöffnetem Querschnitt und einem Randansatz (25), der an den in der Figur links angeordneten, d. h., den laugenseitig hinteren Schenkel (26) angeformt ist. Die so beschaffene Vorabschirmung umgibt den Wellenzapfen (7) und schützt mit ihrem Umlaufring (24) den Radialwellendichtring (11) vor einer Berieselung mit Lauge, welche von der drehenden Trommel (2, Figur 1) aus dem unteren Bereich des Laugenbehälter (1, Figur 1) in den oberen Bereich mitgerissen wird. Die Vorabschirmung ist an den Laugenbehälterboden (3) angeformt und wird zusammen mit diesem einstückig in einem Spritzgussverfahren hergestellt. Auf diese Weise wird der in der Figur 1a links angeordnete Schenkel (26) durch einen Teil des Laugenbehälterbodens (3) gebildet. Im dargestellten Ausführungsbeispiel ist der Steg (27) der Vorabschirmung über den linken Schenkel (26) hinaus zu dem Randansatz (25) erweitert und bildet so vollständig die Anlagefläche für die Dichtung (23).

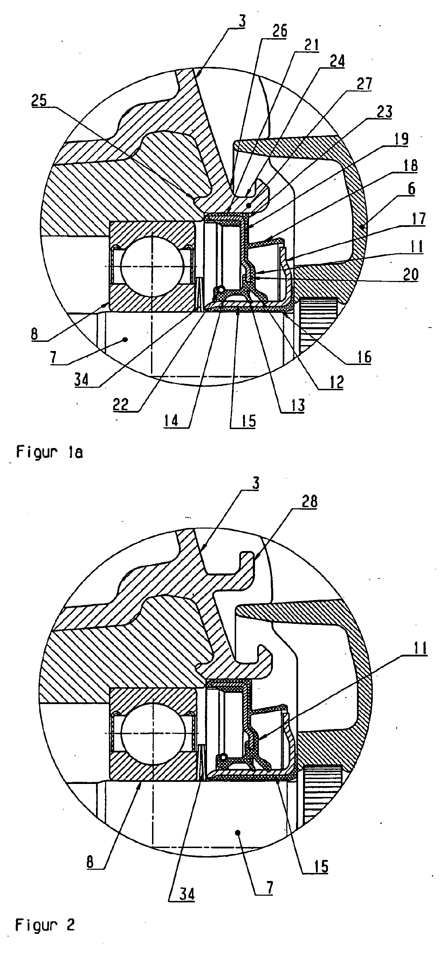

Figur 2 zeigt eine Variante, bei der an den Laugenbehälterboden (3) eine zweite Vorabschirmung (28) konzentrisch zur ersten angeformt ist.

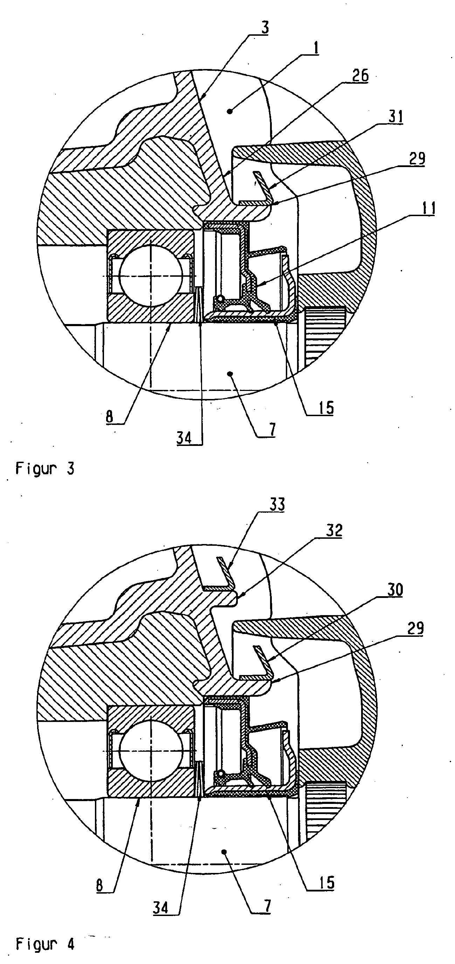

Bei der Dichtungsanordnung nach Figur 3 ist nur der Steg (29) und der durch den Laugenbehälterboden (3) gebildete, d. h. der laugenseitig hintere Schenkel (26) aus laugenbeständigem Kunststoff gefertigt und an den Rand des Laugenbehälters (1) angespritzt. Zur Komplettierung ist auf den Steg (29) ein Ring (31) aus Edelstahl geklemmt, der ein rechtwinkliges Profil besitzt. Hierdurch wird der laugenseitig vordere Schenkel der Vorabschirmung gebildet. Als Dichtung wird der aus den Figuren 1 und 2 bekannte Radialwellendichtring (11) verwendet.

Figur 4 zeigt eine Ausführungsform ähnlich zu Figur 3, wobei an den Laugenbehälterboden (3) konzentrisch zum Steg (29) ein zweiter Steg (32) angeformt ist, auf den ein zweiter Ring (33) geklemmt ist.

Zur Spannung des Lagers (8) kann, wie in den Figuren 1 bis 4 dargestellt, zwischen dem vorderen Lager (8) und dem Laufring (15) eine oder zwei Tellerfedern (34) auf den Wellenzapfen (7) aufgeschoben sein.

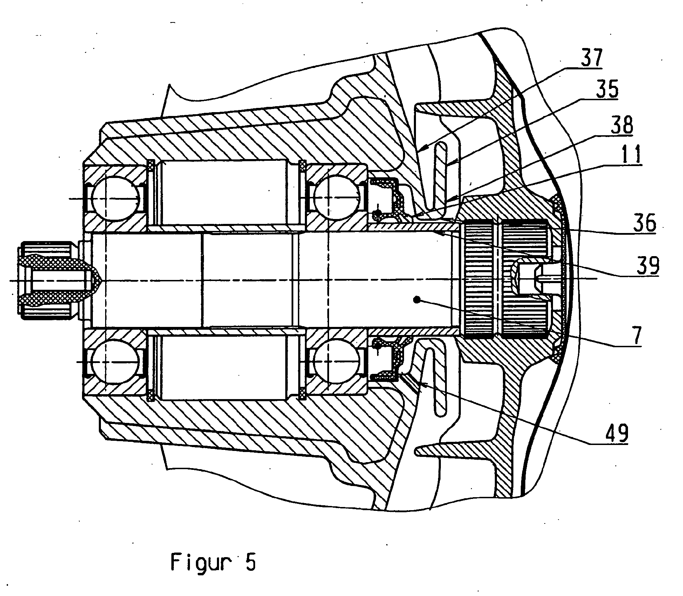

Figur 5 zeigt eine Lageranordnung mit einer Dichtungsanordnung, in der die Vorabschirmung (35) nicht konzentrisch zum Radialwellendichtring (11) positioniert, sondern diesem laugenseitig vorangestellt ist. Diese Ausführungsform besitzt ein v-förmiges Profil. Der Vereinigungsbereich (36) der beiden Schenkel (37, 38) erstreckt sich bis annähernd in den Bereich des Laufrings (39), der aufgrund des Raumbedarfs für die Vorabschirmung keine angeformte Schleuderscheibe besitzt. Die Vorabschirmung besitzt eine Abflussbohrung (49), welche sich im Einbauzustand etwa in der Sechs-Uhr-Position befindet. Hierüber wird Flüssigkeit, die trotz Vorabschirmung in den Hohlraum vor dem Radialwellendichtring (11) eingedrungen ist, in den unteren Bereich des Laugenbehälters (1) zurückgeleitet.

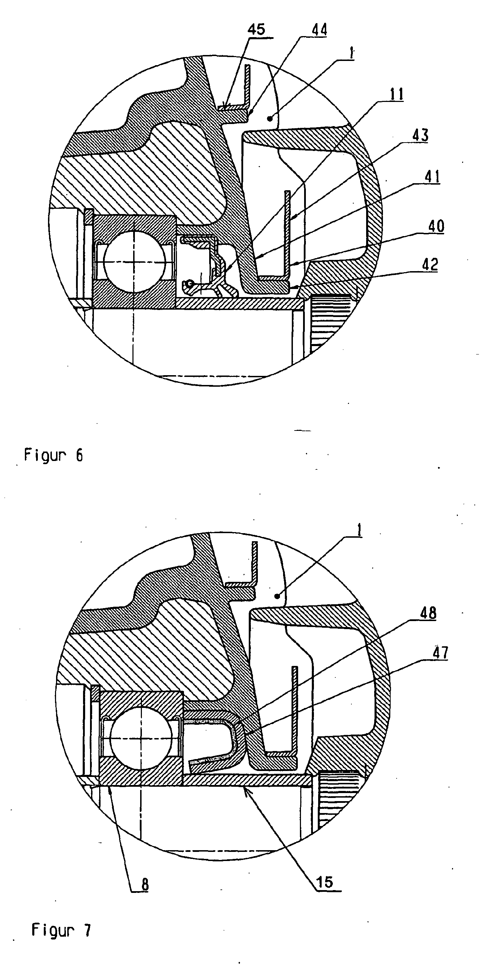

Bei der in Figur 6 gezeigten Dichtungsanordnung ist die Vorabschirmung als u-förmiger Umlaufring ausgebildet. Hier ist nur der Steg (42) und der linke, d. h. der laugenseitig hintere Schenkel (41) aus laugenbeständigem Kunststoff gefertigt und an den Rand des Laugenbehälters (1) angespritzt. Zur Komplettierung ist auf den Steg (42) ein Ring (40) aus Edelstahl geklemmt, der ein rechtwinkliges Profil besitzt. Hierdurch wird der laugenseitig vordere Schenkel (43) der Vorabschirmung gebildet. Im Bereich außerhalb des Lagergehäuses ist an den Laugenbehälterboden konzentrisch zur Öffnung ein zweiter Steg (44) angeformt. Dieser bildet mit einem zweiten aufgesteckten Ring (45) mit abgewinkeltem Profil eine zweite Vorabschirmung. Als Dichtung wird der aus den Figur 5 bekannte Radialwellendichtring (11) verwendet.

In Figur 7 ist die Vorabschirmung identisch zu der in Figur 6 gezeigten Anordnung. Hier wird aber anstelle eines Radialwellendichtrings eine u-förmige Dichtung (47) aus PTFE mit einem federnden Metallring (48) verwendet, deren erster Schenkel als dynamisch beanspruchter Dichtungsteil am Laufring (15) und deren zweiter Schenkel als statisch beanspruchter Dichtungsteil am Außenring des vorderen Lagers (8) anliegt.

## Patentansprüche

1. Waschmaschine mit einem im Wesentlichen zylindrischen Laugenbehälter (1) und mit einer darin drehbar gelagerten ebenfalls zylindrischen Trommel (2), wobei zur drehbaren Lagerung der Trommel (2) an deren Boden ein Wellenzapfen (7) angeordnet ist, welcher sich durch eine Öffnung (4) im Laugenbehälterboden (3) erstreckt und von mindestens zwei Lagern (8, 9) aufgenommen wird, welche innerhalb eines Lagergehäuses (5) angeordnet sind, und wobei zur Abdichtung der Öffnung (4) eine Dichtungsanordnung vorgesehen ist, die mit einem dynamisch beanspruchten Dichtungsteil (12, 13, 14, 47) an dem Wellenzapfen (7), einem auf dem Wellenzapfen (7) angeordneten Laufring oder am Innenring des Lagers (8) und mit einem statisch beanspruchten Dichtungsteil (23) am Laugenbehälterboden (3) oder am Lagergehäuse (5) anliegt und laugenseitig vor oder konzentrisch zu diesen Dichtungsteilen eine Vorabschirmung besitzt,
**dadurch gekennzeichnet,**
**dass** wenigstens der im Bereich der Öffnung (4) liegende Teil des Laugenbehälterbodens (3) aus einem laugenbeständigen Kunststoff besteht und dass wenigstens ein Teil der Vorabschirmung und das Teil des Laugenbehälterbodens einstückig in einem Spritzgussverfahren hergestellt sind.

2. Waschmaschine nach Anspruch 1,
**dadurch gekennzeichnet,**
**dass** die Vorabschirmung als ein den Wellenzapfen (7) umgebender Umlaufring (24) mit im Wesentlichen v- oder u-förmigem, nach außen geöffnetem Querschnitt ausgebildet ist.

3. Waschmaschine mit einer Dichtungsanordnung nach Anspruch 2,
**dadurch gekennzeichnet,**
**dass** sich der der Öffnung gegenüberliegende Vereinigungsbereich (36) der beiden Schenkel (37, 38) der Vorabschirmung bis annähernd in den Bereich des Wellenzapfens (7) bzw. des Laufrings (15) erstreckt.

4. Waschmaschine mit einer Dichtungsanordnung nach Anspruch 3,
**dadurch gekennzeichnet**
**dass** die Vorabschirmung mit einer Abflussbohrung (49) ausgestattet ist, welche sich im Einbauzustand etwa in der Sechs-Uhr-Position befindet.

5. Waschmaschine mit einer Dichtungsanordnung nach mindestens einem der Ansprüche 1 bis 4,
**dadurch gekennzeichnet,**
**dass** die Vorabschirmung wenigstens teilweise aus Metall hergestellt ist.

## Claims

1. Washing machine having a substantially cylindrical washing liquid container (1), and having an equally cylindrical drum (2) rotatably mounted therein, a shaft journal (7) being disposed at the base of the drum (2) for the rotatable mounting of said drum, which shaft journal extends through an opening (4) in the washing liquid container base (3) and is accommodated by at least two bearings (8, 9), which are disposed within a bearing housing (5), and a seal arrangement being provided for sealing the opening (4), which seal arrangement abuts, with a dynamically stressed seal part (12, 13, 14, 47), against the shaft journal (7), against a bearing ring disposed on the shaft journal (7) or against the internal ring of the bearing (8), and abuts, with a statically stressed seal part (23), against the washing liquid container base (3) or against the bearing housing (5), and has a preliminary protective screen at the washing liquid end in front of or concentric with said seal parts, **characterised in that** at least the part of the washing liquid container base (3), lying in the region of the opening (4), is formed from a washing liquid-resistant plastics material, and **in that** at least a part of the preliminary protective screen and the part of the washing liquid container base are produced in one piece in an injection-moulding method.

2. Washing machine according to claim 1, **characterised in that** the preliminary protective screen is in the form of a circumferential ring (24) which surrounds the shaft journal (7) and has a substantially V-shaped or U-shaped, outwardly opened cross-section.

3. Washing machine having a seal arrangement according to claim 2, **characterised in that** the junction region (36) of the two portions (37, 38) of the preliminary protective screen, situated opposite the opening, extends approximately into the region of the shaft journal (7) or respectively of the bearing ring (15).

4. Washing machine having a seal arrangement according to claim 3, **characterised in that** the preliminary protective screen is provided with a discharge bore (49), which is roughly in the 6 o'clock position when installed.

5. Washing machine having a seal arrangement according to at least one of claims 1 to 4, **characterised in that** the preliminary protective screen is at least partially produced from metal.

## Revendications

1. Lave-linge comprenant une cuve de lessive essentiellement cylindrique (1) dans laquelle un tambour (2) également cylindrique est monté de façon rotative, sachant que, pour monter le tambour (2) de façon rotative, un tourillon d'arbre (7) est disposé dans le fond de celui-ci, qui traverse une ouverture (4) dans le fond de cuve de lessive (3) et est supporté par au moins deux paliers (8, 9) disposés à l'intérieur d'un logement de palier (5), et que, pour étancher l'ouverture (4), un dispositif d'étanchéité est prévu, qui est appliqué avec un élément d'étanchéité sollicité de façon dynamique (12, 13, 14, 47) contre le tourillon d'arbre (7), contre une bague de roulement placée sur le tourillon d'arbre (7) ou contre la bague interne du palier (8), et avec un élément d'étanchéité sollicité de façon statique (23) contre le fond de cuve de lessive (3) ou contre le logement de palier (5), et qui possède, côté lessive, en avant des éléments d'étanchéité ou de façon concentrique par rapport à ceux-ci, une préprotection, **caractérisé en ce qu'**au moins la partie du fond de cuve de lessive (3) située dans la zone de l'ouverture (4) est composée d'une matière plastique résistante à la lessive, et **en ce qu'**au moins une partie de la préprotection et la partie du fond de cuve de lessive sont fabriquées d'un seul tenant par moulage par injection.

2. Lave-linge selon la revendication 1, **caractérisé en ce que** la préprotection est réalisée en tant que bague (24) essentiellement de section transversale en forme de V ou de U ouverte vers l'extérieur, qui entoure le tourillon d'arbre (7).

3. Lave-linge équipé d'un dispositif d'étanchéité selon la revendication 2, **caractérisé en ce que** la zone de jonction (36) des deux ailes (37, 38) de la préprotection qui fait face à l'ouverture s'étend jusqu'approximativement dans la zone du tourillon d'arbre (7) ou de la bague de roulement (15).

4. Lave-linge équipé d'un dispositif d'étanchéité selon la revendication 3, **caractérisé en ce que** la préprotection est dotée d'un perçage d'écoulement (49) qui, en position montée, se trouve à peu près à la position de six heures.

5. Lave-linge équipé d'un dispositif d'étanchéité selon au moins l'une des revendications 1 à 4, **caractérisé en ce que** la préprotection est fabriquée au moins partiellement en métal.
